# EUROPÄISCHE PATENTSCHRIFT

(11) **EP 3 544 837 B1**
(45) Veröffentlichungstag und Bekanntmachung des Hinweises auf die Patenterteilung: **29.06.2022**
(21) Anmeldenummer: 17800791.0
(22) Anmeldetag: 08.11.2017
(51) Int. Cl.: B60J 7/00, B60J 1/20

(54) **SONNENSCHUTZROLLO, SCHIEBEDACHSYSTEM MIT EINEM SOLCHEN SONNENSCHUTZROLLO UND VERFAHREN ZUR HERSTELLUNG EINES SONNENSCHUTZROLLOS**
SUN PROTECTION ROLLER BLIND, SUNROOF SYSTEM HAVING SAID SUN PROTECTION ROLLER BLIND AND METHOD FOR FABRICATION OF SAID SUN PROTECTION ROLLER BLIND
PARE-SOLEIL, SYSTÈME DE TOIT OUVRANT AVEC CE PARE-SOLEIL ET PROCÉDÉ DE FABRICATION DU PARE-SOLEIL

(30) Priorität: 24.11.2016 DE 102016122700
(43) Veröffentlichungstag der Anmeldung: 02.10.2019
(73) Patentinhaber: Roof Systems Germany GmbH, 63128 Dietzenbach (DE)
(72) Erfinder: IHLO, Christian, 64289 Darmstadt (DE); BECHER, Thomas, 63110 Rodgau (DE); RÖDER, Joachim, 63165 Mühlheim (DE); BIEWER, Christian, 64839 Münster (DE); ADELMANN, Franz, 63073 Offenbach (DE)
(74) Vertreter: Prinz & Partner mbB
(86) Internationale Anmeldenummer: PCT/EP2017/078658
(87) Internationale Veröffentlichungsnummer: WO 2018/095736

(56) Entgegenhaltungen:
- EP-A1- 2 335 956
- EP-A1- 3 064 386
- WO-A1-2013/149917
- WO-A2-2006/053520
- DE-B3-102014 223 022
- US-A1- 2009 178 771
- US-A1- 2015 251 526

## Beschreibung

Die Erfindung betrifft ein Sonnenschutzrollo für ein Kraftfahrzeug, mit zwei Führungsschienen, einem flächigen Rollokörper und zwei Führungsbändern, die sich entlang zweier Ränder des Rollokörpers erstrecken und mit dem Rollokörper verschweißt sind. Die Erfindung betrifft auch ein Schiebedachsystem mit einem solchen Sonnenschutzrollo.

Bei einem Schiebedachsystem für ein Kraftfahrzeug ist das Sonnenschutzrollo üblicherweise unterhalb einer Dachöffnung angeordnet. Es kann zwischen einer zurückgeschobenen Stellung, in der sich das Rollo außerhalb der Dachöffnung befindet, und einer mehr oder weniger ausgezogenen (oder vorgeschobenen) Stellung verstellt werden, in der die Dachöffnung mehr oder weniger abgedeckt ist. Hierdurch kann verhindert werden, dass Sonnenstrahlung direkt in den Fahrzeuginnenraum einfällt.

Über die primäre Funktion des Verschattens hinaus kann das Sonnenschutzrollo auch dazu diesen, den Fahrtwind abzuschirmen, wenn es sich bei geöffnetem Deckel des Schiebedachsystems in der ausgezogenen Stellung befindet.

In vielen Fällen wird das Sonnenschutzrollo, wenn es zurückgeschoben wird, platzsparend zu einer Rolle zusammengerollt. Um dies zu ermöglichen, sind die Führungsbänder und der Rollokörper flexibel. Die Führungsbänder können aus Federstahl bestehen, und der Rollokörper kann aus einem Folienmaterial, einem Gewebe oder ähnlichem Material bestehen.

Wenn die Führungsbänder aus Federstahl bestehen, wird der Rollokörper mit diesen meist verklebt. Eine Verklebung ist in mancherlei Hinsicht nicht optimal. Zum einen ist eine Aushärtezeit nötig, was die Prozesszeit erhöht. Zum anderen besteht bei einer Klebeverbindung das Risiko des Kriechens, also eines langsamen Verschieben des Rollokörpers relativ zu den Führungsbändern.

Aus dem Stand der Technik ist auch bekannt, den Rollokörper mit den Führungsbändern zu vernähen. Dies ist aber insofern nachteilig, als ein gelochtes Führungsband notwendig ist.

Schiebedachsysteme für ein Kraftfahrzeug, mit zwei Führungsschienen und einem Sonnenschutzrollo mit einem flächigen Rollokörper und zwei Führungsbändern sind in der WO 2006 053 520 A2, der US 2009/ 178 771 A1 sowie der EP 2 335 956 A1 gezeigt.

Aus der EP 3 064 386 A1 ist ferner ein Schiebedachsystem für ein Kraftfahrzeug, mit zwei Führungsschienen und einem Sonnenschutzrollo bekannt, das gefaltete zueinander entgegengesetzte longitudinale Kanten aufweist, die in den Führungsschienen geführt werden.

Die WO 2013/149917 A1 zeigt ein Sonnenschutzrollo für ein Kraftfahrzeug, mit zwei Führungsschienen, einem flächigen Rollokörper und zwei Führungsbändern, die in den Führungsschienen aufgenommen sind. Die Führungsschienen haben jeweils einen zur Mitte des Fahrzeugs hin angeordneten kurzen Schenkel und einen zur Außenseite des Fahrzeugs hin angeordneten Schenkel, die zueinander versetzt sind. Ferner sind die Ränder des Rollokörpers mit der von der Fahrzeugmitte abgewandten Seite der Führungsbänder verschweißt und liegen an der Innenseite der Führungsschienen am außenliegenden Schenkel an.

Die Aufgabe der Erfindung besteht darin, ein Sonnenschutzrollo zu schaffen, das mit geringem Aufwand hergestellt werden kann und sich durch gute Betriebseigenschaften auszeichnet.

Zur Lösung dieser Aufgabe ist ein Sonnenschutzrollo für ein Kraftfahrzeug, mit zwei Führungsschienen, einem flächigen Rollokörper und zwei Führungsbändern aus Kunststoff vorgesehen. Die Führungsbänder erstrecken sich entlang zweier Ränder des Rollokörpers und sind mit dem Rollokörper verschweißt. Dabei sind die Führungsbänder in den Führungsschienen aufgenommen. Die Führungsschienen haben jeweils einen C-förmigen Querschnitt mit einem zur Mitte des Fahrzeugs hin angeordneten kurzen Schenkel und einem zur Außenseite des Fahrzeugs hin angeordneten Schenkel. Dabei ist jeweils der zur Mitte des Fahrzeugs hin angeordnete kurze Schenkel auf einem tieferen Niveau angeordnet als der auf der Außenseite des Fahrzeugs liegende Schenkel, sodass die Innenseite des zur Mitte des Fahrzeugs hin angeordneten kurzen Schenkels gegenüber der Innenseite des auf der Außenseite des Fahrzeugs liegenden Schenkels versetzt ist. Ferner sind die Ränder des Rollokörpers mit der von der Fahrzeugmitte abgewandten Seite der Führungsbänder verschweißt und liegen an der Innenseite der Führungsschienen am außenliegenden Schenkel an. Dabei erstreckt sich die Schweißnaht über weniger als 50% der Breite der Führungsbänder, was hinsichtlich der Menge an Energie vorteilhaft ist, die zum Verschweißen aufgewendet werden muss. Des Weiteren haben die Führungsbänder eine Dicke in der Größenordnung von 250µm bis 500µm. Es hat sich herausgestellt, dass diese Werte einen guten Kompromiss zwischen Festigkeit einerseits und geringen Abmessungen im aufgewickelten Zustand andererseits darstellen.

Das Sonnenschutzrollo hat ferner den Vorteil, dass die aus Kunststoff bestehenden Führungsbänder mit geringer Reibung und sehr geräuscharm in den Führungsschienen gleiten. Indem die Ränder des Rollokörpers an der Innenseite der Führungsschienen anliegen, lässt sich der Winkel zwischen dem Rollokörper und den Führungsbändern minimieren, der im Sinne eines Abschälens des Rollokörpers von den Führungsbändern wirkt. Somit wird eine hohe Belastbarkeit der Schweißverbindung erzielt. Dadurch, dass die Schenkel der Führungsschienen gegeneinander versetzt sind, ergibt sich der Vorteil, dass der Bauraum in der z-Richtung des Fahrzeugs minimiert ist.

Indem die Führungsbänder aus Kunststoff bestehen und der Rollokörper mit den Führungsbändern verschweißt ist, kann mittels einer Schweißnaht die gewünschte Verbindung zwischen den Führungsbändern und dem Rollokörper mit geringem Aufwand, in kurzer Zeit und mit hoher Dauerfestigkeit hergestellt werden. Im Gegensatz zum Stand der Technik, wo es teilweise notwendig war, zusätzliche Verbindungsmittel (Klebstoff, Faden, Niete usw.) für die Befestigung des Rollokörpers an den Führungsbändern vorzusehen, sind solche zusätzlichen Verbindungsmittel bei der Erfindung nicht mehr erforderlich. Darüber erfordert ein Führungsband aus Kunststoff weniger Aufwand im Bereich der zugeordneten Führungsschiene für optimales Gleiten und geringe Geräuschentwicklung. Im Stand der Technik war es zum Teil erforderlich, Führungsschienen aus Aluminium innenseitig mit einer eigenen Kunststoffschiene auszukleiden, um Reibung und Geräuschniveau niedrig zu halten. Bei der vorliegenden Erfindung hingegen können jetzt Führungsschienen aus Metall, zum Beispiel Aluminium, ohne innenseitige Beschichtung verwendet werden, was auch eine deutliche Kostenreduzierung zur Folge hat.

Der C-förmige Querschnitt der Führungsschienen hat ferner den Vorteil, dass sich mit dieser Form eine geringe Bauhöhe erzielen lässt, während gleichzeitig die Führungsbänder zuverlässig in den Führungsschienen geführt sind.

Als Material für die Führungsbänder wird vorzugsweise ein Polyester-Material verwendet. Dieses zeichnet sich durch eine gute Verschweißbarkeit bei geringen Materialkosten aus.

Insbesondere wird für die Führungsbänder Polyethylenterephthalat (PET), Polybutylenterephthalat (PBT) oder Polycarbonat (PC) verwendet. Diese Materialien gewährleisten die gewünschte Flexibilität über eine lange Lebensdauer.

Gemäß einer bevorzugten Ausführungsform ist vorgesehen, dass sich die Schweißnaht über 20 bis 35% der Breite der Führungsbänder erstreckt. Der Vorteil einer derart schmalen Schweißnaht ist (neben der vergleichsweise geringen Energiemenge, die zum Verschweißen nötig ist), dass ein sehr großer Bereich der Führungsbänder frei bleibt, was zu einer geringen Reibung zwischen dem Sonnenschutzrollo und den Führungsschienen führt, in denen die Führungsbänder aufgenommen sind.

Als Material für den Rollokörper ist insbesondere Polyester geeignet. Dieses Material zeichnet sich durch eine hohe mechanische Festigkeit, eine gute Dauerhaftigkeit und eine gute Verschweißbarkeit aus.

Zur Lösung der oben genannten Aufgabe ist erfindungsgemäß auch ein Schiebedachsystem mit einem Sonnenschutzrollo der vorstehend erläuterten Art vorgesehen.

Die Führungsschienen sind insbesondere aus Metall, besonders vorteilhaft aus Aluminium, und besitzen im Kontaktbereich mit den Führungsbändern keine Beschichtung oder dergleichen, sodass der Sonnenschutzrollo unmittelbar an der Führungsschiene anliegt.

Das Sonnenschutzrollo des Schiebedachs kann mit einem Verfahren hergestellt werden, bei dem der Rollokörper mit den Führungsbändern mittels Ultraschall oder mittels eines Stempels thermisch verschweißt wird. Dieses Verfahren zeichnet sich durch eine hohe Prozesssicherheit aus.

Vorzugsweise liegt die Verschweißungstemperatur in der Größenordnung von 250°C bis 300°C. In diesem Temperaturbereich ergibt sich zum einen eine sehr belastbare Schweißnaht zwischen dem Rollokörper und den Führungsbändern, während andererseits keine Beschädigung des Rollokörpers beim Verschweißen zu befürchten ist.

Die Erfindung wird nachfolgend anhand verschiedener Ausführungsformen beschrieben, die in den beigefügten Zeichnungen dargestellt sind. In diesen zeigen:
- Figur 1 schematisch ein Kraftfahrzeug mit einem im Dach angeordneten, erfindungsgemäßen Schiebedachsystem, das mit einem erfindungsgemäßen Sonnenschutzrollo ausgestattet ist;
- Figur 2 schematisch in einem Schnitt ein Sonnenschutzrollo gemäß einer ersten Ausführungsform;
- Figur 3 in einer schematischen perspektivischen Ansicht das Sonnenschutzrollo von Figur 2;
- Figur 4 schematisch in einer Ansicht entsprechend derjenigen von Figur 2 ein Sonnenschutzrollo gemäß einer zweiten Ausführungsform;
- Figur 5 in einer schematischen perspektivischen Ansicht das Sonnenschutzrollo von Figur 4;
- Figur 6 in einer schematischen Ansicht verschiedene Schritte bei der Herstellung eines erfindungsgemäßen Sonnenschutzrollos.

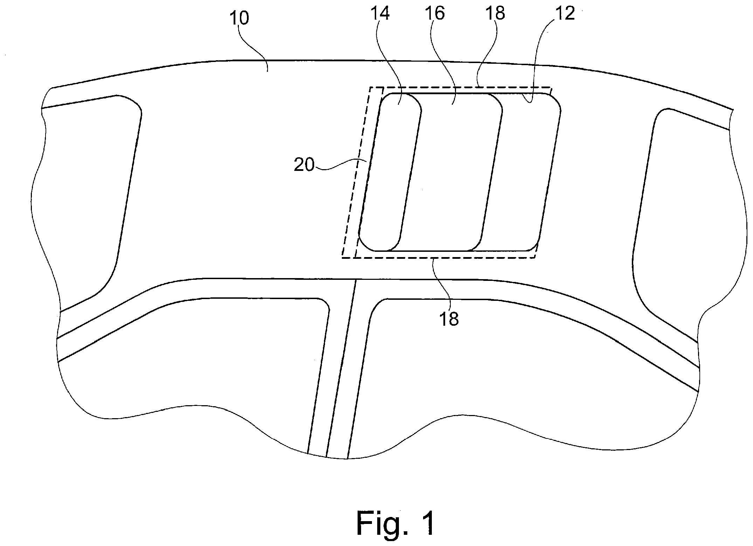

In Figur 1 ist schematisch ein Fahrzeugdach 10 mit einer Dachöffnung 12 zu sehen, in dem verschiebbar ein Deckel eines Schiebedachsystems angeordnet ist. Unterhalb des Deckels 14 ist ein Sonnenschutzrollo 16 angeordnet, dass in zwei schematisch angedeuteten Führungsschienen 18, die sich entlang der Fahrzeuglängsrichtung erstrecken, nach vorne und nach hinten verschiebbar ist.

Die Bestandteile des Schiebedachsystems, mit denen der Deckel 14 verstellt werden kann, sind an sich bekannt und daher hier nicht gezeigt.

Das Sonnenschutzrollo 16 deckt, wenn es vollständig ausgezogen ist, die Dachöffnung 12 im Wesentlichen ab. Um die Dachöffnung 12 freizugeben, kann es nach hinten verschoben werden, wobei es sich dann zu einem hier schematisch angedeuteten Wickel 20 aufrollt.

Das Sonnenschutzrollo 16 besteht aus einem Rollokörper 22, der eine rechteckige Form hat, sowie zwei Führungsbändern 24, die sich entlang von zwei zueinander parallelen Seitenrändern des Rollokörpers 22 erstrecken. Die beiden Führungsbänder 24 sind in den Führungsschienen 18 derart aufgenommen, dass das Sonnenschutzrollo 16 in ihnen verschoben werden kann.

Der Rollokörper 22 besteht aus einem flexiblen Material, dass zum Wickel 20 aufgerollt werden kann. Es kann sich um ein Gewebe, eine Folie, ein Gestrick oder ein anderes Material handeln, mit dem die gewünschte Abschirmung des Fahrzeuginnenraums gegenüber Sonneneinstrahlung und auch Fahrtwind erzielt werden kann. Besonders bevorzugt kann Polyester verwendet werden.

Bei den beiden Führungsbändern 24 handelt es sich um flache, schmale Streifen aus Kunststoff. Die Breite beträgt in der Größenordnung von 6mm bis 10mm, und die Höhe beträgt in der Größenordnung von 250µm bis 500µm.

Als Material für die Führungsbänder 24 wird ein Polyester verwendet, insbesondere Polyethylenterephthalat (PET), Polybutylenterephthalat (PBT) oder Polycarbonat (PC).

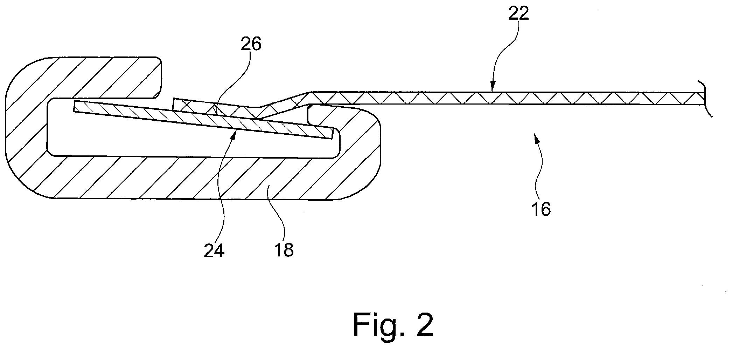

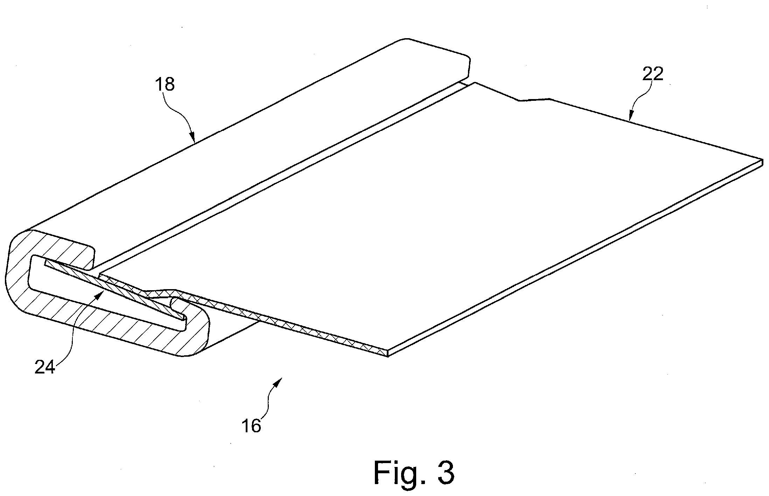

In der in den Figuren 2 und 3 gezeigten Ausführungsform ist der Rollokörper 22 mit den Führungsbändern 24 auf einer Seite etwa mittig verbunden. Der Rollokörper 22 ist mit den Führungsbändern 24 verschweißt (siehe die Schweißnaht 26).

Die Breite der Schweißnaht beträgt hier in der Größenordnung von 25 bis 30 Prozent der Breite des entsprechenden Führungsbandes 24.

Die Führungsschienen 18 haben im Querschnitt die Form eines sehr flachen C, wobei der Rollokörper 22 aus dem Innenquerschnitt der Führungsschienen 18 im Bereich zwischen den beiden kurzen Schenkeln austritt. Da hier der Rollokörper 22 etwa mittig mit den Führungsbändern 24 verbunden ist, stützen sich die Führungsbänder 24 an der Innenseite des Querschnitts der Führungsschienen 18 ab, ohne dass der Rollokörper 22 mit den Innenflächen der Führungsschiene 18 in Kontakt kommt.

In Figur 2 ist zu sehen, dass der zur Mitte des Fahrzeugs hin angeordnete kurze Schenkel des C-förmigen Querschnitts (also der auf der rechten Seite liegende Schenkel) auf einem tieferen Niveau angeordnet ist als der auf der Außenseite des Fahrzeugs liegende Schenkel. Daher ist das Führungsband 24 in der Führungsschiene 18 leicht schräg angestellt, sodass die Schweißnaht geringfügig "angehoben" ist. Der Rollokörper 22 läuft daher leichter über den inneren Schenkel der Führungsschiene 18.

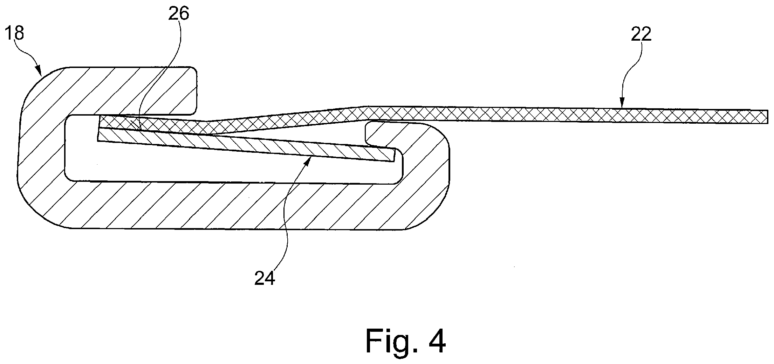

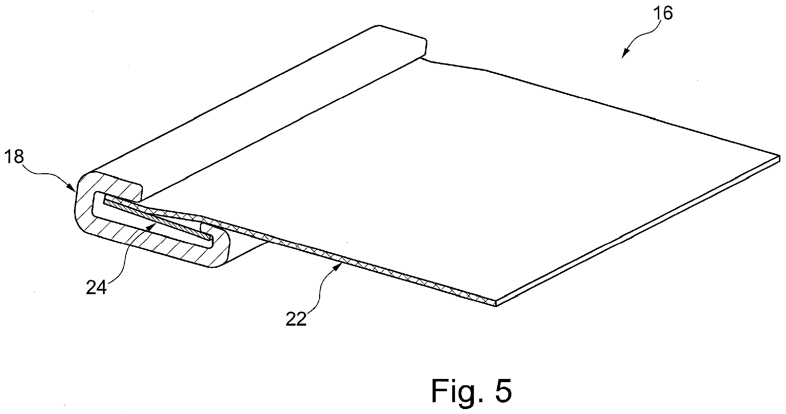

In den Figuren 4 und 5 ist eine zweite Ausführungsform gezeigt. Für die von der vorhergehenden Ausführungsform bekannten Bauteile werden dieselben Bezugszeichen verwendet, und es wird insofern auf die obigen Erläuterungen verwiesen.

Der Unterschied zwischen der ersten und der zweiten Ausführungsform besteht darin, dass bei der zweiten Ausführungsform der Rollokörper 22 mit der von der Fahrzeugmitte abgewandten Seite der Führungsbänder 24 verschweißt ist. Somit liegt der Rollokörper 22 auf der Innenseite der Führungsschiene 18 am außenliegenden Schenkel an. In gleicher Weise wie bei der ersten Ausführungsform befinden sich auch hier die beiden Innenflächen der kurzen Schenkel auf unterschiedlichen Niveaus, sodass das Führungsband 24 derart schräg angestellt ist, dass die Reibung zwischen dem Rollokörper 22 und dem innenliegenden Schenkel der Führungsschiene 18 verringert ist.

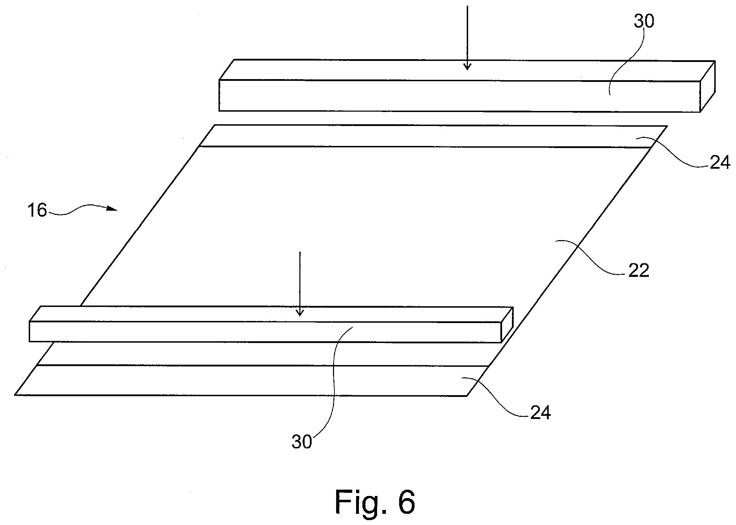

In Figur 6 ist schematisch das Verfahren bei der Herstellung des Sonnenschutzrollos 16 gezeigt. Die Führungsbänder 24 werden entlang von zwei Seitenrändern des Rollokörpers 22 angeordnet und dann mittels einer Schweißvorrichtung 30 mit den Seitenrändern verschweißt.

Die Schweißvorrichtung 30 kann entweder eine Ultraschall-Schweißvorrichtung sein, oder sie kann Heißprägestempel enthalten, die die zum Verschweißen nötige Wärme als Kontaktwärme einbringt.

Als geeignete Schweißtemperatur hat sich ein Temperaturbereich von 250 bis 300°C als besonders geeignet herausgestellt.

Die Schweißverbindung mit der Schweißnaht 26 zwischen dem Rollokörper 22 und den Führungsbändern 24 hat sich als mechanisch sehr belastbar herausgestellt. Gleichzeitig behindert sie das Aufwickeln des Sonnenschutzrollos 16 zu einem Wickel nicht. Aufgrund der vergleichsweise geringen Dicke der Führungsbänder 24 ergibt sich auch an den Seitenrändern ein sehr kompakter Wickel.

Bei sämtlichen Ausführungsformen sind die Führungsschienen 18 aus Metall, insbesondere Aluminium. Der Sonnenschutzrollo 16 kontaktiert die Führungsschienen 18 unmittelbar, das bedeutet, die Führungsschienen 18 haben innenseitig zumindest im Bereich des Kontaktes mit dem Sonnenschutzrollo 16 keine Beschichtung oder ein zwischengeschaltetes Gleitelement. Um die Kosten niedrig zu halten, sind in den Führungsschienen 18 innenseitig überhaupt keine Beschichtungen oder zwischengeschaltete Begleitelemente wie Kunststoffschienen vorgesehen. Damit kann auch der Bauraum reduziert werden.

## Patentansprüche

1. Sonnenschutzrollo (16) für ein Kraftfahrzeug, mit zwei Führungsschienen (18), einem flächigen Rollokörper (22) und zwei Führungsbändern (24) aus Kunststoff, die sich entlang zweier Ränder des Rollokörpers (22) erstrecken und mit dem Rollokörper (22) verschweißt sind, wobei die Führungsbänder (24) in den Führungsschienen (18) aufgenommen sind, wobei die Führungsschienen (18) jeweils einen C-förmigen Querschnitt mit einem zur Mitte des Fahrzeugs hin angeordneten kurzen Schenkel und einem zur Außenseite des Fahrzeugs hin angeordneten Schenkel haben, wobei jeweils der zur Mitte des Fahrzeugs hin angeordnete kurze Schenkel auf einem tieferen Niveau angeordnet ist als der auf der Außenseite des Fahrzeugs liegende Schenkel, sodass die Innenseite des zur Mitte des Fahrzeugs hin angeordneten kurzen Schenkels gegenüber der Innenseite des auf der Außenseite des Fahrzeugs liegenden Schenkels versetzt ist, wobei die Ränder des Rollokörpers (22) mit der von der Fahrzeugmitte abgewandten Seite der Führungsbänder (24) verschweißt sind und an der Innenseite der Führungsschienen (18) am außenliegenden Schenkel anliegen, wobei die Schweißnaht (26) sich über weniger als 50% der Breite der Führungsbänder (24) erstreckt, **dadurch gekennzeichnet, dass** die Führungsbänder (24) eine Dicke in der Größenordnung von 250µm bis 500µm haben.

2. Sonnenschutzrollo nach Anspruch 1, **dadurch gekennzeichnet, dass** die Führungsbänder (24) aus einem Polyester-Material bestehen.

3. Sonnenschutzrollo nach Anspruch 1, **dadurch gekennzeichnet, dass** die Führungsbänder (24) aus Polyethylenterephthalat (PET), Polybutylenterephthalat (PBT) oder Polycarbonat (PC) bestehen.

4. Sonnenschutzrollo nach einem der vorhergehenden Ansprüche, **dadurch gekennzeichnet, dass** die Schweißnaht (26) sich über 20 bis 35% der Breite der Führungsbänder (24) erstreckt.

5. Sonnenschutzrollo nach einem der vorhergehenden Ansprüche, **dadurch gekennzeichnet, dass** der Rollokörper (22) aus Polyester besteht.

6. Schiebedachsystem mit einem Sonnenschutzrollo (16) nach einem der vorhergehenden Ansprüche.

7. Schiebedachsystem nach Anspruch 6, **dadurch gekennzeichnet, dass** die Führungsschienen (18) aus Metall, insbesondere Aluminium sind.

## Claims

1. A sun-protection roller blind (16) for a motor vehicle, comprising two guide rails (18), a flat roller blind body (22) and two guide bands (24) made of plastic, which extend along two edges of the roller blind body (22) and are welded to the roller blind body (22), the guide bands (24) being received in the guide rails (18), the guide rails (18) each having a C-shaped cross section with a short leg arranged toward the center of the vehicle and a leg arranged toward the outside of the vehicle, the short leg arranged toward the center of the vehicle each being arranged at a lower level than the leg located on the outside of the vehicle, so that the inside of the short leg arranged toward the center of the vehicle is offset with respect to the inside of the leg located on the outside of the vehicle, the edges of the roller blind body (22) being welded to the side of the guide bands (24) that faces away from the vehicle center and resting against the outer leg on the inside of the guide rails (18), the weld seam (26) extending over less than 50% of the width of the guide bands (24), **characterized in that** the guide bands (24) have a thickness in the range of from 250 µm to 500 µm.

2. The sun-protection roller blind according to claim 1, **characterized in that** the guide bands (24) consist of a polyester material.

3. The sun-protection roller blind according to claim 1, **characterized in that** the guide bands (24) consist of polyethylene terephthalate (PET), polybutylene terephthalate (PBT) or polycarbonate (PC).

4. The sun-protection roller blind according to any of the preceding claims, **characterized in that** the weld seam (26) extends over 20 to 35% of the width of the guide bands (24).

5. The sun-protection roller blind according to any of the preceding claims, **characterized in that** the roller blind body (22) consists of polyester.

6. A sliding roof system comprising a sun-protection roller blind (16) according to any of the preceding claims.

7. The sliding roof system according to claim 6, **characterized in that** the guide rails (18) are made of metal, in particular aluminum.

## Revendications

1. Store pare-soleil (16) pour véhicule automobile, comprenant deux rails de guidage (18), un corps de store (22) plan et deux bandes de guidage (24) en matière plastique qui s'étendent le long de deux bords du corps de store (22) et sont soudées sur le corps de store (22), les bandes de guidage (24) étant reçues dans les rails de guidage (18), les rails de guidage (18) présentant chacun une section transversale en forme de C avec une branche courte agencée vers le centre du véhicule et une branche agencée vers le côté extérieur du véhicule, la branche courte agencée vers le centre du véhicule étant respectivement agencée à un niveau plus bas que la branche située du côté extérieur du véhicule, de sorte que la face intérieure de la branche courte agencée vers le centre du véhicule est décalé par rapport à la face intérieure de la branche située du côté extérieur du véhicule, les bords du corps de store (22) étant soudés sur la face des bandes de guidage (24) détournée du centre du véhicule et reposant contre la face intérieure des rails de guidage (18) contre la branche extérieure, la soudure (26) s'étendant sur moins de 50% de la largeur des bandes de guidage (24), **caractérisé en ce que** les bandes de guidage (24) présentent une épaisseur dans l'ordre de grandeur de 250 µm à 500 µm.

2. Store pare-soleil selon la revendication 1, **caractérisé en ce que** les bandes de guidage (24) sont en un matériau de polyester.

3. Store pare-soleil selon la revendication 1, **caractérisé en ce que** les bandes de guidage (24) sont en polytéréphtalate d'éthylène (PET), en polytéréphtalate de butylène (PBT) ou en polycarbonate (PC).

4. Store pare-soleil selon l'une des revendications précédentes, **caractérisé en ce que** la soudure (26) s'étend sur 20 à 35% de la largeur des bandes de guidage (24).

5. Store pare-soleil selon l'une des revendications précédentes, **caractérisé en ce que** le corps de store (22) est en polyester.

6. Système de toit ouvrant comprenant un store pare-soleil (16) selon l'une des revendications précédentes.

7. Système de toit ouvrant selon la revendication 6, **caractérisé en ce que** les rails de guidage (18) sont en métal, en particulier en aluminium.
